(19) Europäisches Patentamt

European Patent Office

Office européen des brevets

(11) EP 0 999 570 A1

(12) **EUROPÄISCHE PATENTANMELDUNG**

(43) Veröffentlichungstag:
10.05.2000 Patentblatt 2000/19

(51) Int. Cl.7: **H01H 85/055**, H01H 71/14

(21) Anmeldenummer: **99121886.8**

(22) Anmeldetag: **04.11.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.11.1998 DE 19851311**

(71) Anmelder: **1st Memory Alloys GmbH**
**61279 Grävenwiesbach 2 (DE)**

(72) Erfinder:
• **Steckmann, Helge Georg Dr.**
**D-61279 Grävenwiesbach (DE)**

• Prieb, Viktor, Dr.
**12053 Berlin (DE)**
• Neganov, Leonid, Dr.
**252111 Kiew (UA)**

(74) Vertreter:
**Winter, Brandl, Fürniss, Hübner, Röss,**
**Kaiser, Polte**
**Partnerschaft**
**Patent- und Rechtsanwaltskanzlei**
**Alois-Steinecker-Strasse 22**
**85354 Freising (DE)**

(54) **Elektrische Bruchsicherung mit Memory-Einsatz und dafür geeignete Memory-Legierungen**

(57)      Elektrische Sicherung mit einem Einsatz bzw. Brucheinsatz aus einem sogenannten Memory-Metall bzw. einer sogenannten Memory-Legierung, d.h. aus einer Legierung mit Formgedächtniseigenschaften. Bei Überlast- oder Kurzschlußströmen im elektrischen Netz bricht sich der in der Sicherung fest eingebaute Einsatz durch steigende mechanische Innenspannungen selbst an einer durch die Geometrie seiner Form vorbestimmten Stelle oder an einer durch eine Perforation oder eine Beschichtung mit einer chemisch aktiven Reagenz-Legierung markierten Sollbruchstelle oder an einer Befestigungsstelle mit einer kalibrierten Bruchgrenze, derart, daß sich die Einsatzbruchteile nach dem Bruch des Einsatzes mit einer so großen Geschwindigkeit voneinander entfernen, daß kein Lichtbogen entsteht.

FIG. 4

a)                    b)

EP 0 999 570 A1

**Beschreibung**

Die vorliegende Erfindung betrifft eine elektrische Nieder- bzw. Hochspannungssicherung für die Anwendung in Elektronik und Elektrotechnik in elektrischen Vorrichtungen für deren lichtbogenlose Ausschaltung bei thermischen Beanspruchungen, Überlast- und Kurzschlußströmen, und insbesondere einen Brucheinsatz für solch eine Sicherung aus einer Legierung mit Formgedächtniseigenschaften sowie für die Herstellung eines solchen Einsatzes geeignete Formgedächtnislegierungen auf Cu-Basis. Diese elektrische Sicherung wird mit einem Brucheinsatz in unterschiedlichen geometrischen Formen und deren Kombinationen bereitgestellt, und ebenso werden die für die Herstellung des Einsatzes geeigneten Formgedächtnislegierungen bzw. Memory-Legierungen mit unterschiedlichen Zusammensetzungen bereitgestellt. Hierbei wird in einem Sicherungskörper mit einer vereinfachten Konstruktion ein Einsatz aus einer für elektrotechnische Zwecke besonders geeigneten Legierung auf Cu-Basis und mit Formgedächtniseigenschaften (Memory-Metall) eingebaut.

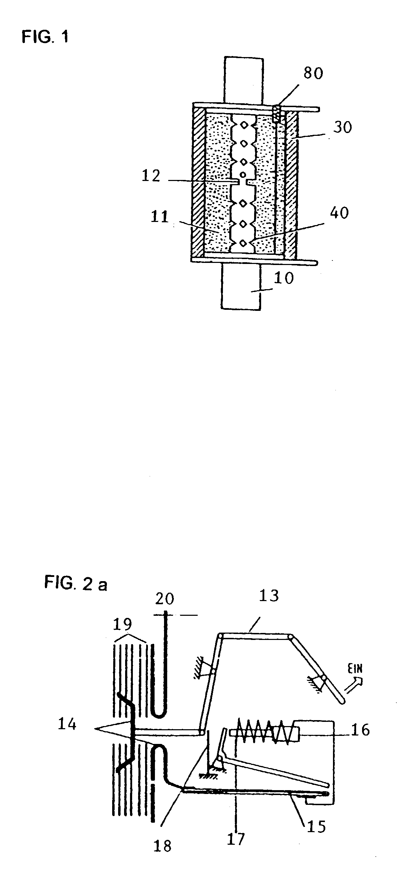

Nach dem Stand der Technik sind als elektrische Sicherungen sogenannte Schmelzsicherungen bekannt (W. Knies, K. Schierack: Elektrische Anlagetechnik: Kraftwerke, Netze, Schaltanlagen, Schutzeinrichtungen / München; Wien: Hanser, 1991, Seiten 231-241). Eine Schmelzsicherung nach dem Stand der Technik besteht beispielsweise nach DIN 43620 aus einem mit Quarzsand 11 gefüllten Keramikkörper 30, zwei Kontaktmessern 10, einem eingebauten Schmelzeinsatz und einem Kennmelder 80 (Figur 1). Der Schmelzeinsatz besitzt genau festgelegte Abschmelzstellen eines oder mehrerer paralleler Schmelzleiter 40 für Überlast- und Kurzschlußströme. Bei Überlastströmen schmelzen temperaturempfindliche Lötbrücken 12 zeitverzögert ab. Bei einem Kurzschluß schmelzen mehrere Engstellen ab und verdampfen gleichzeitig. Der entstehende Lichtbogen wird in mehrere Teillichtbögen zerlegt, so daß eine möglichst große Lichtbogenspannung entsteht. Der verdampfende Schmelzleiter 40 sintert mit dem Quarzsand 11 zu einem Leiter mit sehr hohem Widerstand, wodurch der Strom begrenzt wird.

Die Hauptnachteile von Schmelzsicherungen sind:

- Die Ausschaltung des kritischen Stromes erfolgt erst nach dem Erreichen der Schmelztemperatur des Schmelzleitermaterials (1080°C für Cu), was zu einer längeren Gesamtausschaltzeit führt.
- Beim Schmelzen des Einsatzes entsteht ein Lichtbogen, was sowohl zur Metallisierung der Sandfüllung 11 als auch des Keramikkörpers 30 führt und einen Durchgang eines Rechtsstromes ermöglicht.
- Die hohe Wärmeabgabe beim Schmelzen des Einsatzes und der Entstehung des Lichtbogens führt zu einer Druckerhöhung innerhalb des geschlossenen Keramikkörpers 30 und zu dessen Zerstörung.
- Die hohe Betriebstemperatur der Sicherung, die von dem auf den Nennstrom kalibriertem Querschnitt des Schmelzeinsatzes abhängt, im Bereich von bis zu 400-450°C führt zu einer Temperaturerhöhung der gesamten elektrischen Vorrichtung und zum Austrocknen von Isolierungsstoffen und zur Änderung der elektrischen Eigenschaften des Schmelzeinsatzes durch die durch diese erhöhten Temperaturen hervorgerufene bzw. verstärkte Alterung der Sicherung.
- Die Funktionsfähigkeit einer Schmelzsicherung verringert sich bei Temperaturen unterhalb von 0°C und bei Anwesenheit von Feuchtigkeit, die zum Einfrieren der Sandfüllung 11 führen kann.
- Die Schmelzsicherung weist bei kritischen Stromwerten eine schlechte Temperaturempfindlichkeit auf, die mit der Wärmeabfuhr durch die Sandfüllung 11 zusammenhängt.
- Der kleine Spalt zwischen den abgeschmolzenen Teilen des Einsatzes einer Schmelzsicherung kann zur wiederholten Entstehung eines Lichtbogens führen.

Um einige dieser Nachteile der Schmelzsicherungen zu beseitigen, wurden elektromechanische Selbstschalter entwickelt. Es sind Leitungsschutzschalter (LS-Schalter) und Leistungsschalter bekannt, die als Transformator-, Generator-, Motor-, Kondensatorschutzschalter usw., d. h. für Anlagen mit großer Induktivität, verwendet werden.

Wie in Figur 2a zu sehen ist, besitzen LS-Schalter die folgenden konstruktiven Elemente.

Ein von Hand zu betätigendes Schaltschloß 13 mit Freiauslösung, ein Kontaktsystem 14 mit Lichtbogenlöscheinrichtung, einen thermisch verzögerten Auslöser 15 (Bimetallauslöser, Überlastauslöser) und einen unverzögerten elektromagnetischen Auslöser 16 (Kurzschlußauslöser). Ferner weist ein LS-Schalter eine Zuleitung 17, eine Feder 18, Lichtbogenlaufbleche 19 und eine Ableitung 20 auf.

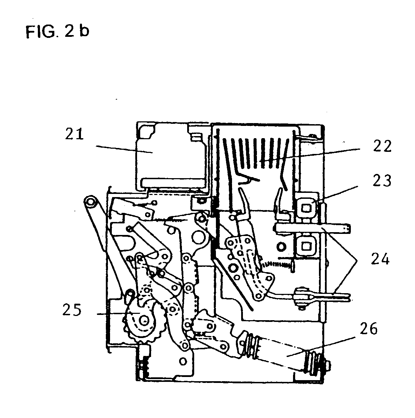

Wie in Figur 2b zu sehen ist, ist ein Leistungsschalter noch komplizierter aufgebaut und weist einen elektronischen Auslöseblock 21, Lichtbogenkammern 22, einen Stromwandler 23 zur Meßwertübertragung an den elektronischen Auslöseblock 21, Hauptstromanschlüsse 24, eine Vorspanneinrichtung 25 und einen Kraftspeicher 26 auf.

Diese Entwicklung hat also die ohnehin komplexe, zum Löschen eines Lichtbogen geeignete Konstruktion von Schmelzsicherungen - Sandfüllungen, Perforation des Einsatzes usw. - weiter verkompliziert.

GB 797 068 offenbart eine elektrische Sicherung, bei der ein vorgespannter Einsatz, der aus zwei elastischen mittels Lot verbundenen Teilen besteht, in einem Sicherungskörper angeordnet ist. Wird die Verbindungsstelle durch Überströme erwärmt, so lösen sich die beiden Teile voneinander und schnellen aufgrund der Federkraft auseinander.

DE 196 07 756 C1 offenbart eine elektrische Sicherung, die ein Formgedächtniselement verwendet, um Schmelzleiter bei auftretenden niedrigen Überströmen mechanisch zu trennen. Das Formgedächtniselement dreht dazu einen Dreh- oder Scherstab, durch den die Schmelzleiter geführt sind.

Es ist somit Aufgabe der vorliegenden Erfindung, eine elektrische Sicherung mit einer verkürzten Gesamtauslösezeit bereitzustellen, die einfach herzustellen und vielseitig verwendbar ist.

Die Lösung dieser Aufgabe erfolgt durch die Merkmale der Ansprüche 1 bzw. 4.

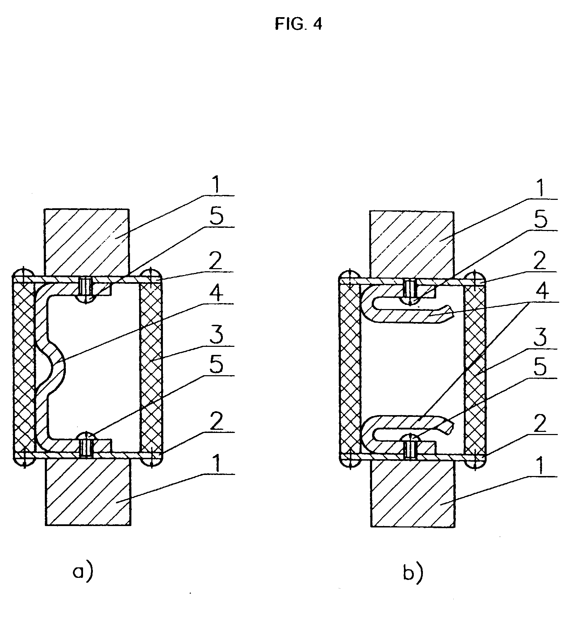

Die erfindungsgemäße Sicherung nach Anspruch 1 weist einen Einsatz bzw. Brucheinsatz aus einem sogenannten Memory-Metall bzw. einer sogenannten Memory-Legierung auf, d.h. aus einer Legierung mit Formgedächtniseigenschaften. Der Einsatz aus Memory-Metall ermöglicht neue vereinfachte Sicherungskonstruktionen mit einem neu ausgestalteten Gehäuse, z. B. aus einem wärmebeständigen Kunststoff anstatt des teuren Gehäuses aus einer Hochtemperaturkeramik, ohne Sandfüllung, in das er eingebaut wird (Figur 4), wobei der Einsatz aus einer Formgedächtnislegierung auf Cu-Basis gleichzeitig zu Kontaktmessern erweitert werden kann und auch als Kennmelder nach seinem Bruch dienen kann. Bei Überlast- oder Kurzschlußströmen im elektrischen Netz bricht sich der in der Sicherung fest eingebaute Einsatz durch steigende mechanische Innenspannungen selbst an einer durch die Geometrie seiner Form vorbestimmten Stelle oder an einer durch eine Perforation oder eine Beschichtung mit einer chemisch aktiven Reagenz-Legierung markierten Sollbruchstelle oder an einer Befestigungsstelle mit einer kalibrierten Bruchgrenze, derart, daß sich die Einsatzbruchteile nach dem Bruch des Einsatzes mit einer so großen Geschwindigkeit voneinander entfernen, daß kein Lichtbogen entsteht.

Die Formgedächtniseigenschaften des Einsatzes müssen bei erhöhten Temperaturen und bei häufigen Zyklen über den Umwandlungstemperaturbereich hinaus stabil bleiben. Bekannte Formgedächtnislegierungen auf Cu-Basis erfüllen diese Voraussetzung nicht. So sind Legierungen mit Formgedächtniseigenschaften bzw. Formgedächtnislegierungen bzw. Memory-Legierungen auf Kupferbasis mit Umwandlungstemperaturen unterhalb von 100°C bekannt, beispielsweise aus "Proc. of the Int. Conf. on the Mart. Transformation ICOMAT 95, Lausanne, Switzerland, August 20-25, 1995", Part II, Herausgeber R. Gothard and J. Van Humbeeck, in J. de Physique IV, Vol. 5, Colloque C8, Suppl. au J. de Physique III, n°12, 1995, Seiten C8-913 bis C8-918. Es besteht die Tendenz, mehrere Elemente zuzugeben, um die Stabilität des Martensits zu erhöhen und erhöhte Umwandlungstemperaturen zu erreichen (Sugimoto K., Kamei K., Nakaniwa M., "Cu-Al-Ni-Mn: A New Shape Memory Alloy for High Temperature Application", Engineering Aspects of Shape Memory Alloys, T.W. Duerig et al., Herausgeber Butterwords-Heinemann Ltd., (1990), Seiten 89-95.). Im Gegensatz dazu stellt die vorliegende Erfindung zwei neue Formgedächtnislegierungen auf Cu-Basis bzw. Kupferbasis mit bis auf 215°C erhöhten Umwandlungstemperaturen, mit erhöhter Alterungs- und Wärmebeständigkeit bis zu 600°C und mit Beständigkeit gegenüber Temperatur- bzw. Umwandlungszyklen bereit. Die erste Legierung enthält, in Massenprozent: Aluminium (Al) 10,8-11,8; Kadmium (Cd) 2,5-5,4; Nickel 0,5-1,5; Silber (Ag) 0-2,7; Mangan (Mn) 0-0,5; Vanadium (V) 0,1-0,5 und Kupfer (Cu) als Rest. Die zweite Legierung enthält, in Massenprozent: Aluminium (Al) 10,8-11,9; Beryllium (Be) 0,9-2,5; Silber (Ag) 1,2-4,5; Zirkonium (Zr) 2,2-5,8; Magnesium (Mg) 0,7-5,3; Natrium (Na) 0,1-0,7; und Kupfer (Cu) als Rest.

Die Hauptvorteile der erfindungsgemäßen Sicherung sind:

1. Senkung der Auslösetemperatur auf 60-400°C durch ein grundsätzlich neues Funktionsprinzip.

2. Verhinderung der Lichtbogenentstehung durch die große Geschwindigkeit (Fluchtgeschwindigkeit), mit der sich die Bruchteile des Einsatzes, d.h., die. Einsatzbruchteile, nach dem Auslösen der Sicherung bzw. dem Bruch des Einsatzes voneinander entfernen.

3. Verkürzung der Gesamtauslösezeit um den Faktor 3 bis 5 durch die niedrige Auslösetemperatur und die große Bruch-bzw. Fluchtgeschwindigkeit.

4. Beseitigung der thermischen und mechanischen Beanspruchung, die bei einer Lichtbogenentstehung zur Zerstörung des Sicherungskörpers und anderer Sicherungsbauteile führt.

5. Einwandfreie Funktiontüchtigkeit bzw. Funktionsfähigkeit auch bei Temperaturen unterhalb von 0°C und bei Feuchtigkeit durch Verzicht auf eine Sandfüllung, die nicht mehr erforderlich ist.

6. Wesentliche Vereinfachung und Verbilligung der Sicherungskonstruktion durch Verzicht auf einen Keramikkörper, Dichtungen und zusätzlich bzw. getrennt bereitzustellende Kontaktmesser und Kennmelder.

7. Eine um den Faktor 2 bis 3 höhere Temperaturempfindlichkeit durch die Abwesenheit einer wärmeaufnehmenden Sandfüllung.

8. Ausschließen einer wiederholten Entstehung eines Lichtbogens durch die wesentlich größere Entfernung der Einsatzbruchteile nach dem Auslösen der Sicherung, wobei diese maximale bzw. optimierte Entfernung bis zu 98% des Abstandes zwischen den Kontaktböden bzw. Befestigungsstellen des Einsatzes betragen kann.

9. Wesentliche Senkung der Betriebstemperatur bzw. Erwärmungstemperatur der gesamten elektrischen Vorrichtung.

10. Eine wesentliche Senkung des Sicherungsgewichtes und der äußeren Abmessungen der Sicherung durch den Verzicht auf eine Sandfüllung und die Ausführung des Sicherungskörpers aus einem Kunststoff mit Ventilationsöffnungen.

11. Eine vorteilhafte Nutzung der Einsatzbruchteile als Kennmelder dadurch, daß sie nach dem Auslösen der Sicherung aus dem Sicherungskörper hinausstechen bzw. hinausragen, oder eine vorteilhafte Nutzung der Einsatzbruchteile als Auslöser für einen Standardkennmelder dadurch, daß sie beim Auslösen der Sicherung den die Standardkennmelderkappe haltenden gespannten Draht, der einen geringen Durchmesser aufweist, "durchhauen" bzw. durchtrennen.

12. Eine vorteilhafte Verkleinerung der Stromdichte im Einsatz durch die Vergrößerung des Querschnitts des Einsatz. Es ist zu beachten, daß bei Schmelzsicherungen eine Vergrößerung des Querschnittes des Einsatzes nachteilhafterweise zu einer Vergrößerung der Schmelzzeit und zur Entstehung eines stabilen Lichtbogens führt.

13. Eine vorteilhafte automatische Nachbesserung des Kontaktes des Einsatzes an seinen Befestigungsstellen durch das automatische Selbstanspannen des Memory-Einsatzes beim Erwärmen in den Temperaturbereich der martensitischen Rückumwandlung ($A_s$ < Temperatur T < $A_f$) hinein aufgrund des durch den Einsatz hindurchgehenden Stromes oder durch entsprechende Funkenbildung bei einer Lockerung des Kontaktes.

14. Ferner kann man die Zeit/Strom-Charakteristika des Einsatzes bzw. der elektrischen Sicherung durch entsprechende Wahl der Zusammensetzung der Memory-Legierung für den Einsatz, des Querschnittes des Einsatzes, der martensitischen "Rastverformung" des Einsatzes bei dessen Einbau in die elektrische Sicherung und der Wärmeabfuhrbedingungen einstellen bzw. steuern.

Die Formgedächtnislegierungen bzw. Memory-Legierungen für die erfindungsgemäßen Memory-Brucheinsätze müssen die folgenden Anforderungen erfüllen:

- hoher elektrischer Leitwert,
- Beständigkeit gegenüber Temperatur- bzw. Umwandlungszyklen,
- Korrosionsbeständigkeit,
- Wärmebeständigkeit bzw. Alterungsbeständigkeit bei erhöhten Temperaturen bezüglich, sowohl der elektrischen Eigenschaften als auch der Formgedächtniseigenschaften,
- Ermüdungsbeständigkeit,
- Beständigkeit gegenüber der Einwirkung eines Lichtbogenplasmas, und
- auf Überlast- und Kurzschlußströme eingestellte, durch die Zusammensetzung der Memory-Legierung gesteuerte Bruchtemperatur.

Als Cu-Basis Memory-Legierungen werden Legierungen gemäß der Ansprüche 18 und 19 genommen, die als Grundkomponente Kupfer (Cu) 67,6-86,1 und Aluminium (Al) 10,8-11,9 in Massenprozent enthalten, und deren Eigenschaften durch Zugabe von weiteren Elementen in kleinen Mengen nachgebessert werden.

Die Zugabe von Kadmium (Cd) in Grenzen von 2,5-5,0 Gewichtsprozent führt zur Plastifizierung des Martensits, erhöht die Lichtbogenbeständigkeit und verbessert die elektrischen Eigenschaften.

Die Zugabe von Silber (Ag) in Grenzen von 2,1-2,5 Gewichtsprozent führt zur Leitwerterhöhung und zur Erhöhung der Korrosionsbeständigkeit.

Die Zugabe von Vanadium (V) in Grenzen von 0,1-0,5 Gewichtsprozent erhöht die Ermüdungsbeständigkeit, Temperaturzyklenbeständigkeit und Wärmebeständigkeit.

Die Zugabe von Beryllium (Be) in Grenzen von 0,2-2,5 Gewichtsprozent führt zur Verfestigung der Legierung durch Ausscheidungshärtung.

Die Zugabe von Zirkonium (Zr) in Grenzen von 2,2-5,8 Gewichtsprozent verbessert die Formgedächtniseigenschaften und die Wärmebeständigkeit.

Die Zugabe von Magnesium (Mg) in Grenzen von 0,7-5,3 Gewichtsprozent erhöht die mechanische Festigkeit.

Die Zugabe von Natrium (Na) in Grenzen von 0,1-0,7 Gewichtsprozent verkleinert die Korngröße und verbessert dadurch die mechanischen Eigenschaften.

Die erste Legierung hat folgende physikalische und technologische Eigenschaften (Austenit-Martensit):

| | |
|---|---|
| Dichte, kg/m$^3$ | 8800-8900 |
| Spezifische Wärmeleitfähigkeit, W/m • K | 95-120 |
| Spezifischer elektrischer Widerstand (20°C), $\mu\Omega \cdot m$ | 0,015-0,020 |

| | |
|---|---|
| Temperaturkoeffizient des spezifischen elektrischen Widerstands (20-100°C), K$^{-1}$ | 0,00032-0,00035 |
| Schmelztemperatur, °C | 1050-1070 |

Die zweite Legierung hat folgende physikalische und technologische Eigenschaften (Austenit-Martensit):

| | |
|---|---|
| Dichte, kg/m$^3$ | 8250-8500 |
| Spezifische Wärmeleitfähigkeit, W/m • K | 80-100 |
| Spezifischer elektrischer Widerstand (20°C), µΩ • m | 0,010-0,030 |
| Temperaturkoeffizient des spezifischen elektrischen Widerstandes (20-100°C), K$^{-1}$ | 0,00073 |
| Schmelztemperatur, °C | 1070-1090 |

Die legierenden Elemente bilden chemische Verbindungen mit Kupfer - Cu - oder miteinander, die beschränkte Mischkristallösbarkeit aufweisen. Die Abschreckung in kaltem Wasser von 910°C führt zu einem übersättigten Mischkristall. Die Alterung bei 250°C während 20 Minuten führt zum Ausbilden von intermetallischen Verbindungen und dadurch zu einer Auslösungshärtung der beiden Legierungen. Die Legierungen vereinigen hochstabile Formgedächtniseigenschaften mit verbesserten mechanischen Eigenschaften: Große Elastizitäts-, Fließ- und Ermüdungsgrenzen, und erhöhte Verschleißfestigkeit. Die Legierungen sind auch durch eine erhöhte elektrische Leitfähigkeit und Wärmeleitfähigkeit gekennzeichnet.

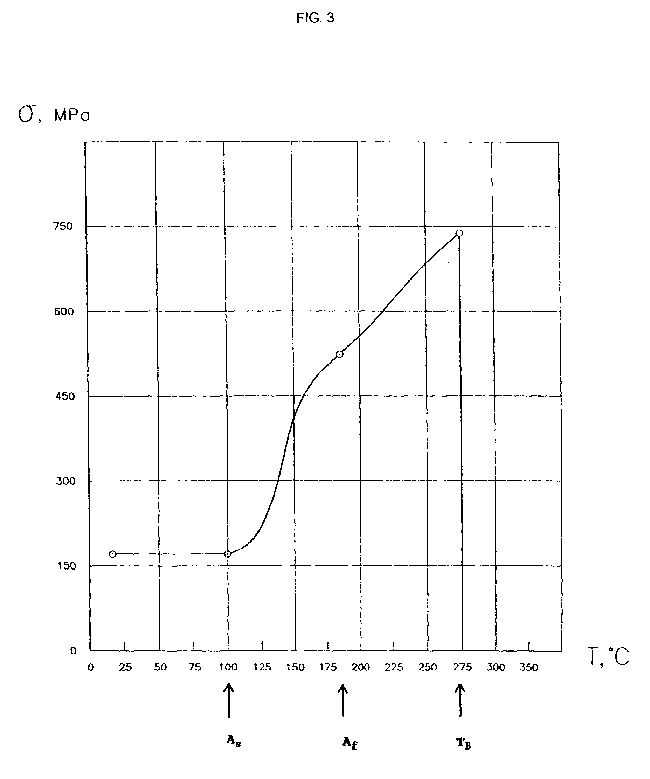

Durch die vorteilhafte Ausgestaltung bzw. Herstellung des Brucheinsatzes nach Anspruch 2 aus Memory-Legierungen bzw. Legierungen mit Formgedächtniseigenschaften wird erreicht, daß sich bei der Erwärmung des in den Sicherungskörper fest eingebauten Einsatzes über den Temperaturbereich der martensitischen Rückumwandlung hinweg und darüber hinaus die mechanische Kraft bzw. die inneren Spannungen (Innenspannungen) im Einsatz kontinuierlich bis zur Bruchgrenze (Figur 3) entwickeln bzw. zunehmen.

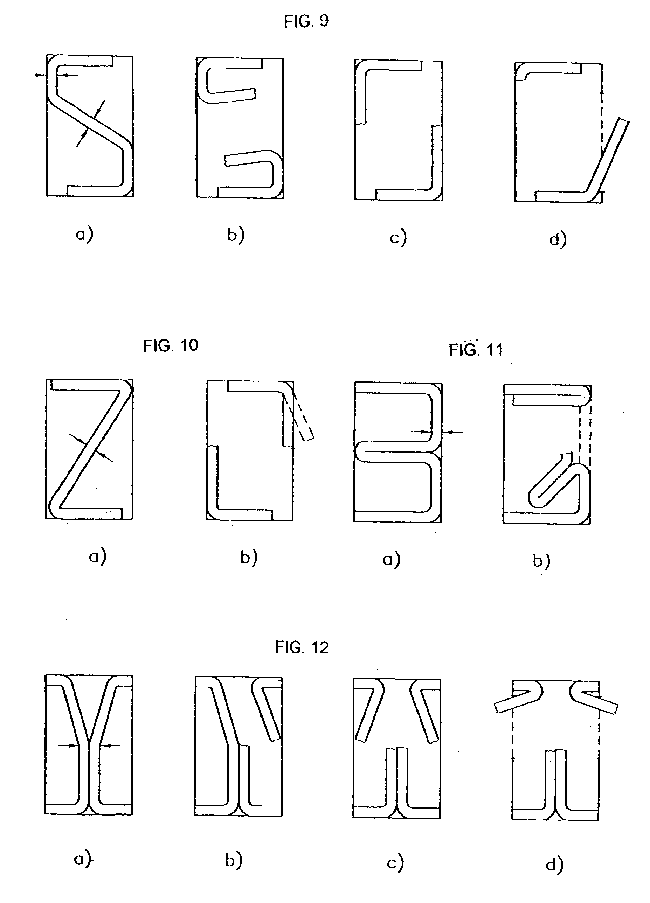

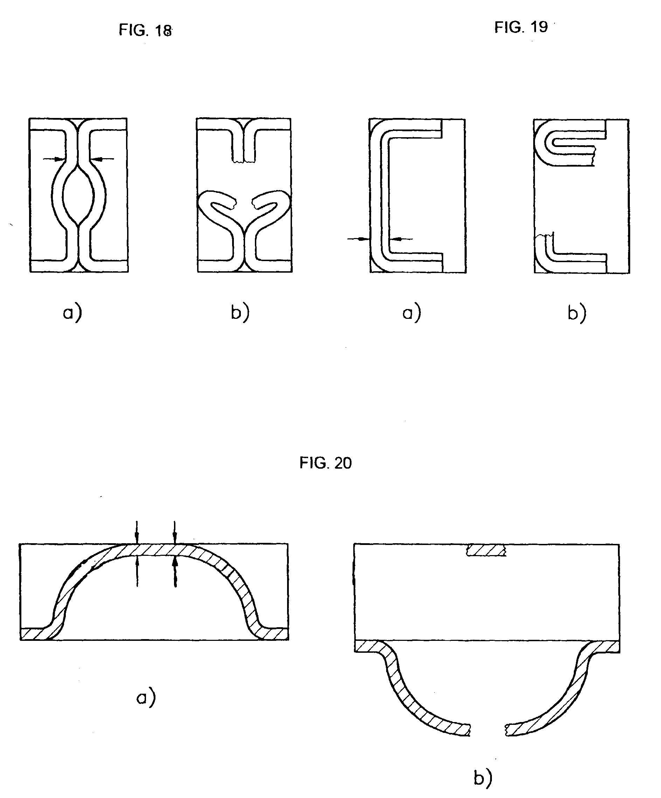

Das vorteilhafte Merkmal, dem Brucheinsatz nach Anspruch 3 durch die plastische Verformung in dem austenitischen Hochtemperaturzustand eine geometrische Form einzuprägen, führt dazu, daß der in einer der beispielsweise in den Figuren 4 bis 22 gezeigten, gegenüber der voreingeprägten Ursprungsform geänderten Form nach einem der Ansprüche 3 und 4 in den Sicherungskörper eingebaute Brucheinsatz diese ursprüngliche Form bzw. Ursprungsform bei Erwärmung über die Endtemperatur A$_f$ der martensitischen Rückumwandlung hinaus zu erreichen versucht, und sich so selbst bzw. eine vorgesehene Bruchbefestigungsstelle bricht, so daß sich die Bruchteile des Einsatzes nach dem Auslösen der Sicherung, also dem Bruch des Einsatzes, in vorbestimmte gewünschte Richtungen entfernen, wobei der Abstand, den die Einsatzbruchteile nach dem Auslösen der Sicherung schließlich einnehmen, je nach der ursprünglichen eingeprägten Form des Einsatzes auf Werte von 10 bis 98% des Abstandes zwischen den Befestigungsstellen des Einsatzes einstellbar ist.

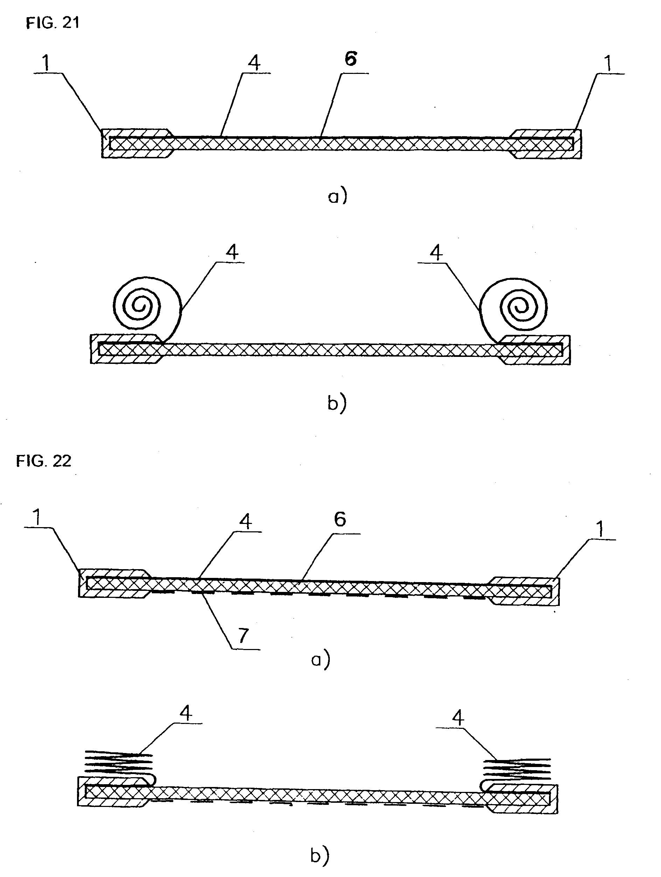

Die vorteilhafte Ausgestaltung des Einsatzes nach Anspruch 4 als ein dünnes Band, dem durch die plastische Verformung im austenitischen Hochtemperaturzustand die ursprüngliche Form einer Rolle oder einer Harmonika eingeprägt wird und das dann in einer aufgerollten bzw. ausgedehnten geraden Form (Fig. 21a bzw. 22a) auf einer Isolierungsunterlage, falls erforderlich mit einer gespalteten Beschichtung ihrer Gegenseite als ein bekanntes Lichtbogengefäß, befestigt wird, führt zu einer Erhöhung der Fluchtgeschwindigkeit der Einsatzbruchteile, das heißt, der Geschwindigkeit, mit der sich die Bruchteile des Einsatzes nach dem Auslösen der Sicherung voneinander wegbewegen, und führt ebenfalls zu einer Erhöhung des Abstandes der Einsatzbruchteile nach diesem Auslösen der Sicherung.

Die vorteilhafte harte / unnachgiebige Befestigung des Memory-Brucheinsatzes in einem Sicherungskörper nach Anspruch 5, beispielsweise durch Schrauben wie in Anspruch 6, an den beiden Sicherungskontaktböden der Sicherung (vgl. z.B. Fig. 4), derart, daß jede Formänderung des Einsatzes bei seiner Erwärmung über den Temperaturbereich der martensitischen Rückumwandlung hinweg und hinaus durch eine derartige harte bzw. unnachgiebige Befestigung verhindert wird, führt zur Steigerung der sich bei Überlast- und Kurzschlußströmen entwickelnden Kraft bzw. Innenspannung, also zu einer Zunahme der mechanische Spannungen im Inneren des Einsatzes, über die Bruchgrenze des Einsatzmaterials hinaus und dadurch zum Selbstbruch des Einsatzes und Auslösen der Sicherung.

Die vorteilhafte Perforation des Memory-Brucheinsatzes nach Anspruch 7 ermöglicht es, eine Sollbruchstelle des Einsatzes im voraus festzulegen.

Die vorteilhafte Beschichtung in Form eines Streifens entlang einer Querrichtung des Einsatzes nach Anspruch 8, ermöglicht es, eine Sollbruchstelle des Einsatzes im voraus genau festzulegen. Die Beschichtung erfolgt mit einer der bekannten aktiven Reagenz-Legierungen mit niedriger Schmelztemperatur. Die Legierungen reagieren mit der Memory-Legierung, indem sie in die Kristallinengrenzen des Mehrkristalleinsatzes durchdringen und ihre mechanische Festigkeit abschwächen, so daß ein Zwischenkristallinenbruch des Einsatzes an der derart festgelegten, "markierten" Sollbruchstelle stattfindet.

Die vorteilhafte Befestigung des Memory-Brucheinsatzes in einem Sicherungskörper, beispielsweise mit einer Seite durch eine Schraube an einem Sicherungskontaktboden des Sicherungskörpers und mit der anderen Seite an einem Kontaktmesser oder an dem anderen Kontaktboden durch eine brüchige Verbindung, beispielsweise mittels Löt-, Punktschweiß-, Niet- oder Schraubverbindung, mit einer durch die Stärke der Verbindung kalibrierten Bruchgrenze, führt nach Anspruch 10 bzw. 11 dazu, daß ein Auslösen der Sicherung bzw. ein Bruch des Einsatzes bei Überlast- und Kurzschlußströmen an dieser brüchigen Befestigungsstelle stattfindet, derart, daß der Einsatz aus Memory-Legierung unbeschädigt bleibt und durch eine erneute Befestigung wieder bzw. mehrmals verwendet werden kann.

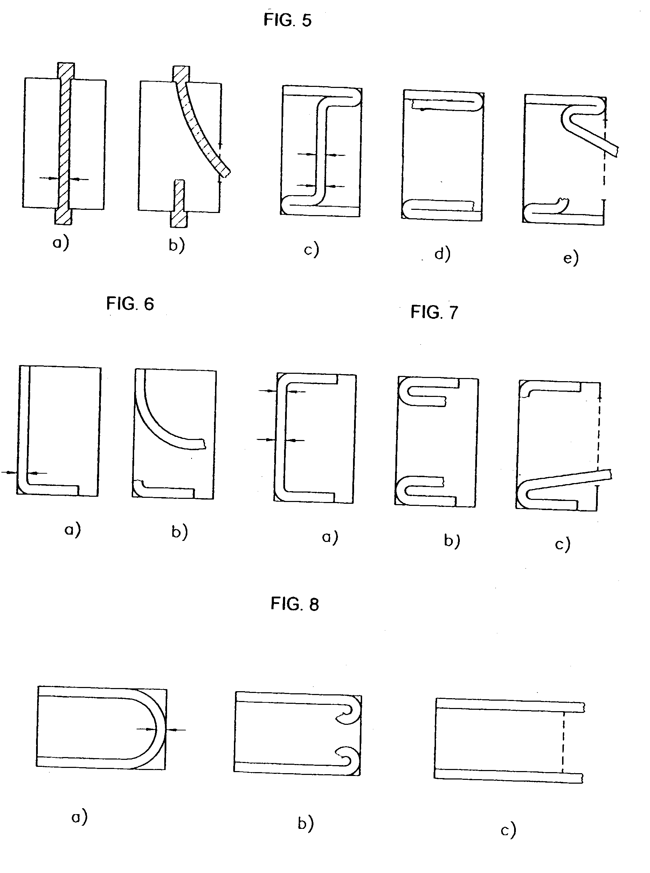

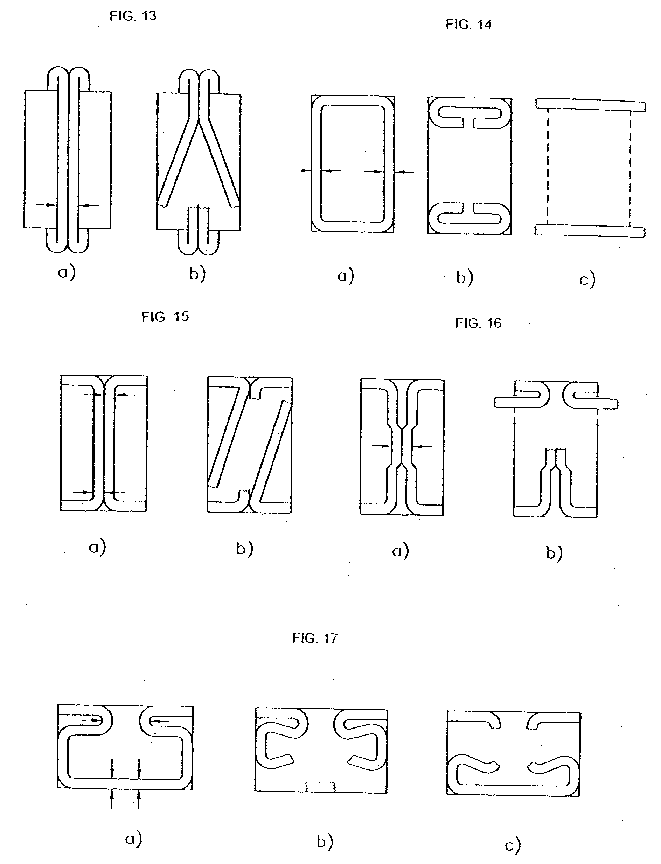

Der vorteilhafte Einbau des massiven Memory-Brucheinsatzes in einem Sicherungskörper (vgl. z. B. Figur 5a, 5b und 13a, 13b), derart, daß er durch die beiden Sicherungskontaktböden des Sicherungskörpers hinausgeführt und von außen befestigt wird, ermöglicht es nach Anspruch 12, den Einsatz aus einer entsprechenden für elektrotechnische Zwecke geeigneten Formgedächtnislegierung auf Cu-Basis gleichzeitig als Kontaktmesser zu verwenden und dadurch das Problem des Herstellens bzw. Aufrechterhaltens eines sicheren Kontaktes zwischen den Kontaktmessern einer elektrischen Sicherung und ihrem Einsatz zu beseitigen, wodurch die Sicherungskonstruktion weiter vereinfacht werden kann.

Das vorteilhafte Erwärmen des Memory-Einsatzes aufgrund des durch die Sicherung hindurchfließenden Stromes führt gemäß Anspruch 13 durch die Selbstanspannung des Einsatzes zu einer automatischen Sicherung bzw. Nachbesserung der elektrischen Kontakte an den Schraubenbefestigungsstellen des Einsatzes, an denen dieser im Sicherungskörper an den Kontaktböden des Sicherungskörpers befestigt ist.

Die vorteilhafte Ausgestaltung der Sollbruchstelle und der ursprünglichen Brucheinsatzform, d.h. der Ursprungsform des Einsatzes, führt gemäß Anspruch 14 dazu, daß Einsatzbruchteile nach dem Auslösen der Sicherung durch einen Spalt oder gegebenenfalls durch mehrere Spalten im Sicherungskörper nach außen herausragen (vgl. z. B. Figuren 5, 7, 8, 9, 10, 12, 14 und 16) und somit anzeigen, daß die Sicherung gewechselt werden muß. Dies führt zu einer weiteren Vereinfachung der Sicherungskonstruktion, da kein zusätzlicher, getrennter Kennmelder eingebaut werden muß.

Die vorteilhafte Sicherungskörperkonstruktion mit Längsspalten nach Anspruch 15 oder 16 verbessert die Wärmeabfuhr von dem Memory-Brucheinsatz und läßt die Einsatzbruchteile nach dem Auslösen der Sicherung "hinausfliegen", derart, daß sie aus dem Sicherungskörper herausragen, wodurch sie anzeigen, daß die Sicherung gewechselt werden muß.

Die mit den Ansprüchen 18 bis 20 beanspruchten erfindungsgemäßen elektrischen Sicherungen bzw. Einsätze bestehen aus für die Lösung der Aufgaben der vorliegenden Erfindung besonders geeigneten Memory-Legierungen bzw. Formgedächtnislegierungen auf Cu-Basis.

Die vorteilhafte Anwendung dieser amorphen erfindungsgemäßen Memory-Legierungen nach Anspruch 20 verbessert wesentlich die elektrischen und mechanischen Eigenschaften des Brucheinsatzes gemäß Anspruch 4.

Die übrigen Unteransprüche beziehen sich auf vorteilhafte Ausgestaltungen der Erfindung.

Weitere Einzelheiten und Vorteile der vorliegenden Erfindung ergeben sich aus der nachfolgenden Beschreibung bevorzugter Ausführungsformen des Memory-Brucheinsatzes anhand der Zeichnungen.

Es zeigen:

Figur 1 einen Schnitt durch eine NH-Schmelzsicherung nach DIN 43620;

Figur 2a und 2b den Aufbau eines Leitungsschutzschalters (a) und eines Leistungsschalters (b);

Figur 3 die Entwicklung der Innenspannung in einem Brucheinsatz aus einer Memory-Legierung bis zur Bruchgrenze $\sigma_B$ bei einer Temperaturerhöhung über den Temperaturbereich der martensitischen Rückumwandlung hinaus bis zur Bruchtemperatur $T_B$;

Figur 4a und 4b jeweils einen Schnitt durch eine Bruchsicherung mit einem Σ-förmigen Memory-Brucheinsatz;

Figur 5a, b, c, d und e einen I-förmigen Memory-Brucheinsatz, der auch als Kontaktmesser (a, b) und Kennmelder (b, e) fungiert;

Figur 6a und 6b einen L-förmigen Memory-Brucheinsatz;

Figur 7a, b und c einen C-förmigen Memory-Brucheinsatz, der auch als Kennmelder (c) fungiert;

Figur 8a, b und c einen U-förmigen Memory-Brucheinsatz, der auch als Kennmelder (c) fungiert;

Figur 9a, b, c und d einen S-förmigen Memory-Brucheinsatz, der auch als Kennmelder (d) fungiert;

Figur 10a und 10b einen Z-förmigen Memory-Brucheinsatz, der auch als Kennmelder (b - gestrichelt) fungiert;

Figur 11a und 11b einen E- bzw. Ǝ-förmigen Memory-Brucheinsatz;

Figur 12a, b, c und d einen Y-förmigen Memory-Brucheinsatz, der auch als Kennmelder (d) fungiert;

Figur 13a und 13b einen I-förmigen Memory-Brucheinsatz der auch als Kontaktmesser fungiert;

Figur 14a, b und c einen O-förmigen Memory-Brucheinsatz, der auch als Kennmelder (c) fungiert;

Figur 15a und 15b einen X-förmigen Memory-Brucheinsatz als Kombination von zwei einfachen C-förmigen Einsätzen;

Figur 16a und 16b einen modifizierten X-förmigen Memory-Brucheinsatz als Kombination von zwei einfachen Y-förmigen Einsätzen, der auch als Kennmelder (b) fungiert;

Figur 17a, b und c einen Ω-förmigen Memory-Brucheinsatz;

Figur 18a und 18b einen Φ-förmigen Memory-Brucheinsatz;

Figur 19a und 19b einen zusammengestellten oder kombinierten C-förmigen Memory-Brucheinsatz, der aus zwei einfachen C-förmigen Einsätzen zusammengestellt oder kombiniert worden ist;

Figur 20a und 20b einen Memory-Brucheinsatz in der Volumenform einer Membran;

Figur 21a und 21b einen Memory-Brucheinsatz als ein dünnes, sich nach dem Auslösen der Sicherung / dem Bruch des Einsatzes zusammenrollendes Band;

Figur 22a und 22 einen Memory-Brucheinsatz als ein dünnes, sich nach dem Auslösen der Sicherung / dem Bruch des Einsatzes zu einer Harmonika zusammenklappendes Band;

Figur 23 Zeit/Strom-Kennlinien für die Σ-förmigen Brucheinsätze mit einem Querschnitt von 4 mm$^2$ aus Memory-Legierungen mit unterschiedlichen Umwandlungstemperaturen $A_f$ ($A_f$ steigt von links nach rechts);

Figur 24 Zeit/Strom-Kennlinien für die Σ-förmigen Brucheinsätze aus einer Memory-Legierung mit unterschiedlichen Querschnitten: 1 - 5 mm$^2$; 2 - 5,5 mm$^2$; 3 - 6,0 mm$^2$; 4 - 6,5 mm$^2$; 5 - 7,0 mm$^2$; 6 - 7,5 mm$^2$; 7 - 8,0 mm$^2$;

Figur 25 Zeit/Strom-Kennlinien für die Σ-förmigen Brucheinsätze aus einer Memory-Legierung mit einem Querschnitt von 3 mm$^2$ bei unterschiedlicher martensitischer "Rastverformung": 1 - 8%; 2 - 5%; 3 - 3%; 4 - 1%; und

Figur 26 Zeit/Strom-Kennlinien für die Σ-förmigen Brucheinsätze aus einer Memory-Legierung mit einem Querschnitt von 2 mm$^2$ bei unterschiedlichen Perforationskoeffizienten des Sicherungskörpers (Perforationskoeffizient = Verhältnis der Fläche der Ventilationslöcher zur Gesamtfläche des Sicherungskörpers): 1 - 10%; 2 - 20%; 3 - 30%.

Die Pfeile auf allen die Form des Einsatzes (Brucheinsatz, Memory-Brucheinsatz) darstellenden Figuren zeigen mögliche Sollbruchstellen. Weiterhin, in Bezug auf die Figuren 4 bis 22, zeigen die mit a gekennzeichneten Figuren und Fig. 5c jeweils den Brucheinsatz vor dessen Bruch, d.h., im martensitischen "Rastverformungs-Zustand", während die restlichen Figuren den Brucheinsatz jeweils in möglichen Zuständen nach dessen Bruch - nach dem Auslösen der Sicherung - darstellen.

Die Formgedächtniseigenschaft einer Memory-Legierung oder Formgedächtnislegierung besteht darin, daß sich eine im martensitischen Zustand bei niedrigen Temperaturen verformte Probe aus der Memory-Legierung bei einer Temperaturerhöhung über den Temperaturbereich $A_s$-$A_f$ hinweg und hindurch ($A_s$: Anfangstemperatur, $A_f$: Endtemperatur, jeweils der martensitischen Rückumwandlung) an ihre ursprüngliche Hochtemperaturform erinnert, also an ihre Ursprungsform, dadurch, daß die martensitische Tieftemperaturverformung rückgängig gemacht wird. Wenn der Rückstellung der martensitischen Tieftemperaturverformung irgendeine Kraft widersteht, wird von der Memory-Probe eine Gegenkraft entwickelt, um die Rückstellung fortzusetzen. Auf diesem Prinzip funktionieren Preßverbände und Massagevorrichtungen aus einem Verbundgewebe mit Memory-Metall, die auf die der Verformungsrückstellung widerstehenden weichen Ödeme Druck ausüben und sie dadurch verkleinern (DE 195 29 500 A1).

Wenn die Rückstellung der martensitischen Verformung durch eine harte / unnachgiebige Verklemmung oder Befestigung völlig verhindert wird, steigt bei Erwärmung über den Temperaturbereich der martensitischen Rückumwandlung hinweg und hinaus die von der Memory-Probe entwickelte Kraft oder die Innenspannung der Probe ohne Formänderung bis zur eigenen Bruchgrenze an, d.h., die Probe bricht sich dann selber. Figur 3 zeigt dieses Verhalten an einem realen, an einem erfindungsgemäßen Brucheinsatz 4 gemessenen σ-T-Diagramm. Auf der Abazisse ist die Temperatur und auf der Ordinate die in dem Memory-Brucheinsatz 4 entwickelte Innenspannung in Megapascal (1MPa = $10^6$ N/m$^2$ = 0,1 kg/mm$^2$) aufgetragen. Die Spannung steigt nahezu linear bei Temperaturerhöhung im Temperaturbereich $A_f < T < T_B$ an. Die Temperatur $A_f$ ist die Temperatur, bei der die martensitische Rückumwandlung der unbelasteten Probe endet. Die Bruchtemperatur $T_B$ ist die Temperatur, bei der die Bruchgrenze des Probenmaterials erreicht wird und der Bruch des hart verklemmten Einsatzes 4 auftritt.

Die Figuren 4a und 4b zeigen eine erste Ausführungsform der erfindungsgemäßen elektrischen Sicherung für Nennströme von 10-300 A und Nennspannungen von 5 - 500 V. Die Sicherung enthält einen Körper 3, zwei Kontaktböden 2, auf denen zwei Kontaktmesser 1 hart / unnachgiebig befestigt sind, und einen Memory-Brucheinsatz 4 in einer Σ-Form, der mit beiden Seiten an den Kontaktböden 2 durch Schrauben 5 ebenfalls hart / unnachgiebig befestigt ist.

Die in Figur 4 dargestellte Sicherung funktioniert folgendermaßen. Wenn der Nennstrom durch den Memory-Einsatz 4 hindurchfließt wird der Memory-Einsatz 4 bis zu einer Temperatur unterhalb der Endtemperatur der martensitischen Rückumwandlung ($A_f$) erwärmt. Diese Erwärmung führt entweder zu keiner Steigerung der mechanischen Spannungen in den Memory-Brucheinsatz 4, wenn die Temperatur des Einsatzes unter der Anfangstemperatur der martensitischen Rückumwandlung ($A_s$) liegt, also unterhalb der Temperatur $A_s$, bei der die martensitische Rückumwandlung einsetzt, oder diese Erwärmung führt zur Entwicklung / Ausbildung der minimalen für die Sicherung oder Nachbesserung der elektrischen Kontakte notwendigen mechanischen Anspannung des Einsatzes 4. Bei andauernden Überlastströmen oder bei Kurzschlußströmen wird der Memory-Brucheinsatz 4 in einer einstellbaren Zeit über die Temperatur $A_f$ hinaus bis zur Bruchtemperatur $T_B$ (Figur 3) erwärmt. Hierbei entwickelt sich die mechanische Innenspannung in dem Memory-Brucheinsatz 4 (Figur 3) bis zur eigenen Bruchgrenze, was zum Bruch des Memory-Einsatzes 4 und dadurch zum Ausschalten von Überlast- und Kurzschlußströmen führt. Nach dem Auslösen der Sicherung / dem Bruch des Einsatzes 4 fliegen die jeweils nur noch an einem Rand befestigten Einsatzbruchteile mit einer so großen Geschwindigkeit und auf eine so große Entfernung auseinander, daß die Lichtbogenentstehung praktisch verhindert wird.

Die Figuren 21a, b und 22a, b zeigen weitere Ausführungsformen des erfindungsgemäßen Memory-Brucheinsatzes mit dem gleichen Funktionsprinzip. Hier wird ein amorphes Memory-Band (Band) 4 auf einer Isolierungsunterlage 6 durch Verklemmung unter Kontaktmessern 1 befestigt. Nach dem Auslösen der Sicherung rollen / klappen die an einem Rand befestigten Bandbruchteile / Einsatzbruchteile zu einer Spirale oder Rolle (Figur 21b) oder einer Harmonika (Figur 22b) zusammen. Dies führt zu einer noch größeren Fluchtgeschwindigkeit der Einsatzbruchteile / Bandbruchteile und zu noch größeren Abständen zwischen den Bruchteilrändern bis hin zu 100% des Abstandes zwischen den Befestigungsstellen des Bandes 4 oder Einsatzes 4. Als zusätzlicher Schutz gegenüber einer Lichtbogenentstehung kann auch die Gegenseite der Isolierungsplatte 6 mit Metallstreifen beschichtet sein, was eine bekannte Lichtbogenlösch- / Entladungsmethode ist.

Nach dem Bruch des Einsatzes 4 wird die gespeicherte elastische Energie des Einsatzes 4 wie bei einer gelösten Feder während der kürzesten Zeit (die Einsatzdicke (Rißstrecke) dividiert durch die Riß- sprich Schallgeschwindigkeit ergibt die Bruchzeit $t_B$ von ca. 5 μs) freigesetzt. Die Geschwindigkeit v des Auseinanderfliegens / der Flucht der Einsatzbruchteile beträgt typischerweise 5 m/s. Die zugehörige maximale Fluchtzeit $t_L$, während der ein Lichtbogen entstehen kann, beträgt typischerweise 0,01 s. Die Erwärmungszeit von einer Temperatur $T \leq A_s$ bis zur Bruchtemperatur $T_B$ beim Kurzschluß (adiabatische Bedingungen) ergibt sich für einen Nennstrom (der Strom, dessen andauernder Fluß durch die Sicherung bzw. den Einsatz 4 hindurch nicht zum Sicherungsbruch führt) von 100A und für einen 200-fachen Kurzschlußstrom zu ungefähr 0,001 s. Man sieht, daß bei Kurzschlußströmen die Gesamtausschaltzeit durch die Fluchtzeit $t_L$ begrenzt wird und ca. 0,01 s beträgt.

Bei einem Überlaststrom wird die Gesamtausschaltzeit durch die Erwärmungszeit $t_E$ begrenzt, in der die Temperatur T des Einsatzes 4 von der Betriebstemperatur auf die Bruchtemperatur $T_B$ ansteigt. Die Gesamtausschaltzeit bzw. die Erwärmungszeit $t_E$ wird bei Überlastströmen durch die Temperatur $A_f$ des Endes der martensitischen Rückumwandlung (also durch die Zusammensetzung der Memory-Legierung), durch die Querschnittsfläche $S_E$ und die Länge $l_E$ des Einsatzes 4 (also durch seine Form), durch die Bruchtemperatur $T_B$ und die Wärmeabgabebedingungen bestimmt. Die Bruchtemperatur $T_B$ hängt ihrerseits von der Bruchgrenze $\sigma_B$ des Einsatzes 4 und von dem Steigungs-

koeffizienten

$$k^{\sigma}{}_{T} = \frac{d\sigma}{dT}$$

der Innenspannung mit der Temperaturerhöhung (Figur 3) ab. Diese Erwärmungszeit soll auch groß genug sein, um das Auslösen bzw. den Bruch des Einsatzes 4 bei Ein- und Ausschaltüberlastströmen zu vermeiden.

Die Bruchgrenze des Einsatzes 4 läßt sich durch eine Perforation gemäß Anspruch 7 oder durch eine Beschichtung mit einem aktiven Stoff gemäß Anspruch 8 variieren. Der Steigungskoeffizient $k^{\sigma}{}_{T}$ kann durch die martensitische "Rastverformung" beeinflußt werden: Je größer die "Rastverformung" ist, desto schneller steigt die Innenspannung des Einsatzes 4 mit der Temperaturerhöhung an. Die "Rastverformung" wird auch durch den Unterschied zwischen der Einsatzform im austenitischen Hochtemperaturzustand (die Form, die die Einsatzbruchteile nach dem Auslösen der Sicherung, wenn man die Einsatzbruchteile dann einfach wieder zusammenfügen oder zusammenhalten würde, ergeben, also die Ursprungsform des Einsatzes 4) gemäß Anspruch 2 und der Einsatzform im martensitischen Tieftemperaturzustand (die Einbauform in die Sicherung bzw. den Sicherungskörper (Körper 3)) gemäß den Ansprüchen 3 und 4 bestimmt. Die Wärmeabgabebedingungen werden sowohl durch die Einsatzform (Wärmeabgabefläche, Kontaktflächen mit dem Sicherungskörper) als auch durch die Konstruktion des Einsatzes 4 gemäß Anspruch 12 (Wärmeabgabe durch die Stromkontakte), des Sicherungskörpers 3 gemäß Anspruch 15 oder 16 und der Kontaktböden 2 bestimmt.

Beim Einbau des erfindungsgemäßen Memory-Brucheinsatzes 4 in einen Sicherungskörper 3, wie es beispielsweise Fig. 4 zeigt, kann der Standardkennmelder einer Schmelzsicherung beibehalten werden. In einer Schmelzsicherung schmilzt ein dünner Draht durch die hohe Temperatur des Lichtbogens und löst eine Feder, die auf der Außenseite eines der Kontaktböden eine Kennkappe ausstößt. Bei dem erfindungsgemäßen Memory-Brucheinsatz 4 wird der Draht nicht geschmolzen, sondern durch die nach dem Auslösen der Sicherung oder dem Bruch des Einsatzes 4 auseinanderfliegenden Teile des Brucheinsatzes 4 "durchschlagen" bzw. durchtrennt.

Die Figuren 4 bis 22 zeigen bevorzugte Einsatzformen, durch die die Sicherungsparameter wie Stromwärmeimpuls, bezeichnet als Joule-Integral $I^{2} \cdot t$ eine für die Kurzschlußabschaltung von Schutzorganen wichtige Größe, der Nennstrom $I_{N}$ und die Nenntemperatur $T_{N}$ eingestellt werden können. Der elektrische Kontakt an den geschraubten Stellen wird bei allen Einsatzformen dadurch gesichert, daß der Memory-Einsatz 4 nach Anspruch 13 bis zu einer Temperatur T im Temperaturbereich $A_{s} < T < A_{f}$ durch den Nennstrom bzw. - bei einem sich gelösten elektrischen Kontakt - durch Funken erwärmt wird. Der Einsatz 4 befindet sich dabei in einem leicht angespannten Zustand, d.h., er steht unter mechanischer innerer Spannung bzw. Innenspannung und stellt so einen zuverlässigen Kontakt über die möglicherweise gelockerten Schrauben her. Wenn der Kontakt doch schlecht wird, führt dies zu einer Funkenbildung und somit zu einem zusätzlichen Erwärmen des Einsatzes 4. Dadurch steigt die Innenspannung des Einsatzes 4 weiter an und der gelockerte Kontakt wird automatisch wieder hergestellt.

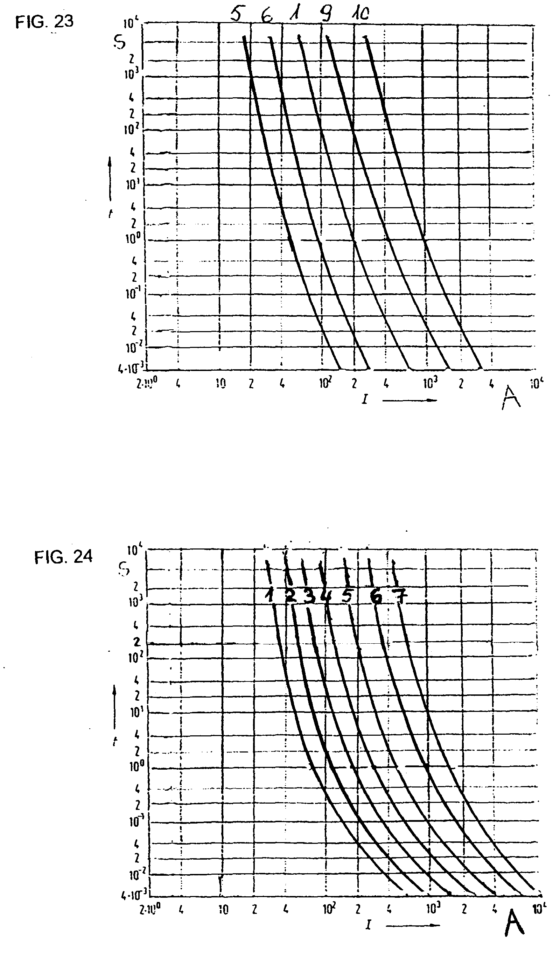

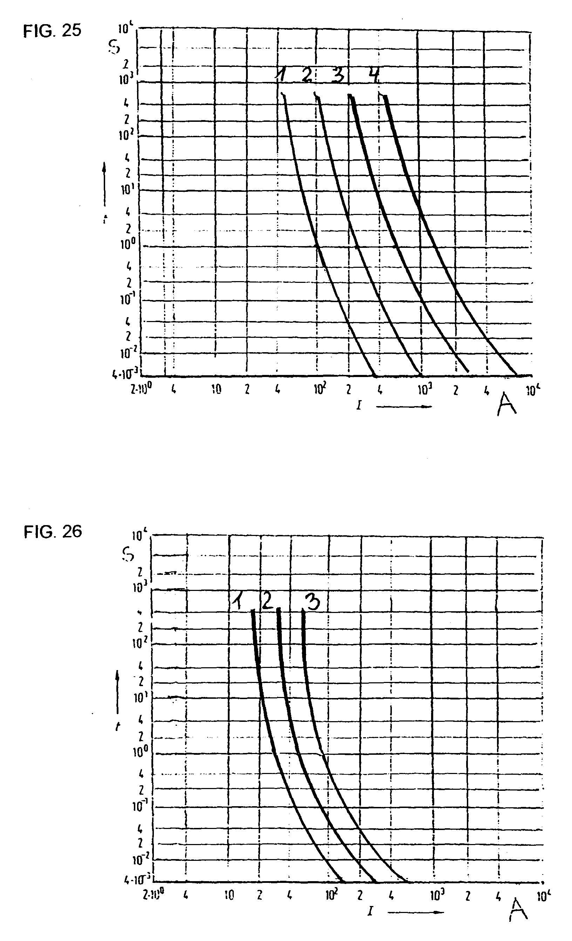

Die Figuren 23 bis 26 zeigen Zeit/Strom-Kennlinien, wie sie auch für Leitungsschutzsicherungen nach DIN VDE 0636 aufgenommen werden, wobei auf der Abszisse die Stromstärke in Ampere und auf der Ordinate die Zeit in Sekunden aufgetragen ist. Die Zeit/Strom-Kennlinien charakterisieren die erfindungsgemäßen Bruchsicherungen mit Memory-Einsätzen 4 aus den erfindungsgemäßen Memory-Legierungen mit unterschiedlichen Zusammensetzungen bzw. unterschiedlichen Umwandlungstemperaturen, mit unterschiedlichen Querschnitten, mit unterschiedlichen "Rastverformungen" und für unterschiedliche Perforationskoeffizienten des Sicherungskörpers 3 (Perforationskoeffizient = Verhältnis der Fläche von Ventilationsöffnungen zur Gesamtfläche eines Sicherungskörpers 3). Es ist aus diesen Diagrammen zu ersehen, wie die Sicherungscharakteristika durch all diese Parameter einzustellen sind, und zwar führen eine

- Erhöhung der Temperatur $A_{f}$ durch Änderung der Zusammensetzung der Memory-Legierung;
- Vergrößerung des Einsatzquerschnittes;
- Minderung der martensitischen Rastverformung; und
- Vergrößerung des Perforationskoeffizienten des Sicherungskörpers 3 (Verhältnis der Fläche der Ventilationslöcher zur Gesamtfläche des Sicherungskörpers 3) zur Verschiebung der Zeit/Strom-Kennlinien nach rechts zu höheren Stromwerten.

**Patentansprüche**

1.  Elektrische Sicherung mit

    einem Körper (3),

Kontaktböden (2) und

einem in dem Körper (3) eingebauten Einsatz (4) aus einer Legierung mit Formgedächtniseigenschaften, wobei der Einsatz (4) mit den Kontaktböden (2) verbunden ist.

2.  Elektrische Sicherung nach Anspruch 1, dadurch gekennzeichnet, daß

der Einsatz (4) in einem austenitischen Hochtemperaturzustand zu einer bestimmten Form plastisch verformt wird.

3.  Elektrische Sicherung nach Anspruch 2, dadurch gekennzeichnet, daß

der in dem austenitischen Hochtemperaturzustand zu einer bestimmter Form plastisch verformte Einsatz (4) in einem martensitischen Tieftemperaturzustand in einer bestimmten durch martensitische Verformung bei einer der Raumtemperatur entsprechenden Temperatur T, die kleiner als die charakteristische Umwandlungstemperatur $A_f$ der martensitischen Rückumwandlung ist, geänderten Form in den Körper (3) eingebaut wird, und
der Einsatz (4) durch die bei Überlast- und Kurzschlußströmen verursachte Erwärmung über eine charakteristische Bruchtemperatur $T_B$ hinaus, die höher als die charakteristische Umwandlungstemperatur $A_f$ ist, bricht.

4.  Elektrische Sicherung, mit

einem Körper (3),
einer Isolierungsunterlage (6) mit Kontaktmessern (1) und
einem dünnen Band (4) als Brucheinsatz (Einsatz) aus einer Legierung mit Formgedächtniseigenschaften, wobei
dem Band (4) die Form einer Rolle oder die Form einer Harmonika durch eine plastische Verformung in einem austenitischen Hochtemperaturzustand gegeben wurde und
das Band (4) in einem martensitischen Tieftemperaturzustand in einer ausgerollten oder ausgedehnten geraden Form auf der Isolierungsunterlage (6) unter den Kontaktmessern (1) befestigt, insbesondere verklemmt, wird (Fig. 21a-b, 22a-b).

5.  Elektrische Sicherung nach einem der Ansprüche 1-3, dadurch gekennzeichnet, daß

die Verbindung des Einsatzes (4) mit den Kontaktböden (2) hart (unnachgiebig) ist.

6.  Elektrische Sicherung nach Anspruch 5, dadurch gekennzeichnet, daß

die harte (unnachgiebige) Verbindung des Einsatzes (4) mit den Kontaktböden (2) mittels Schrauben (5) durchgeführt ist.

7.  Elektrische Sicherung nach einem der Ansprüche 1-6, dadurch gekennzeichnet, daß

der Einsatz (4) an einer Sollbruchstelle perforiert ist.

8.  Elektrische Sicherung nach einem der Ansprüche 1-6, dadurch gekennzeichnet, daß

der Einsatz (4) an einer Solibruchstelle mit einem aktiven Material beschichtet ist.

9.  Elektrische Sicherung nach Anspruch 8, dadurch gekennzeichnet, daß

das aktive Material ein Metall oder eine Legierung mit einer niedrigen Schmelztemperatur ist.

10. Elektrische Sicherung nach Anspruch 3, dadurch gekennzeichnet, daß

die Verbindung des in dem Körper (3) angeordneten Einsatzes (4) derart erfolgt, daß der Einsatz (4) mit einer Seite an einem der beiden Kontaktböden (2) hart (unnachgiebig) und mit der anderen Seite an einem Kontaktmesser (1) oder an dem anderen der beiden Kontaktböden (2) durch eine brüchige Verbindung, beispielsweise eine Löt-, Punktschweiß-, Niet- oder Schraubverbindung, befestigt ist.

**11.** Elektrische Sicherung nach Anspruch 10, dadurch gekennzeichnet, daß

die harte (unnachgiebige) Befestigung des Einsatzes (4) an dem einen der beiden Kontaktböden (2) mittels Schrauben (5) durchgeführt ist.

**12.** Elektrische Sicherung nach Anspruch 3, dadurch gekennzeichnet, daß

der Einsatz (4) durch die beiden Kontaktböden (2) hindurchgeht und nach außen hinausgeführt ist, und seine Endungen als Kontaktmesser (1) ausgestaltet sind.

**13.** Elektrische Sicherung nach Anspruch 3, dadurch gekennzeichnet, daß

die Verbindung des Einsatzes (4) mit den Kontaktböden mittels Schrauben (5) erfolgt und
der Einsatz (4) durch den Nennstrom oder bei möglicher Kontaktlockerung durch Funken bis zu einer Temperatur, welche zwischen der Anfangstemperatur $A_s$ und der Endtemperatur $A_f$ der martensitischen Rückumwandlung des Einsatzes (4) liegt, erwärmt wird und
die elektrischen Kontakte an den Schraubenbefestigungsstellen (5) durch die durch die Erwärmung hervorgerufene mechanische Selbstanspannung des Einsatzes (4) automatisch nachgebessert werden.

**14.** Elektrische Sicherung nach Anspruch 3, dadurch gekennzeichnet, daß

der Körper (3) mindestens einen Längsspalt aufweist und
nach dem Bruch des Einsatzes (4) die Bruchteile aus dem mindestens einen Längsspalt in dem Körper (3) als Kennmelder herausragen.

**15.** Elektrische Sicherung nach einem der Ansprüche 1-3, 5-13, dadurch gekennzeichnet, daß

der Körper (3) mit Längsspalten ausgestattet ist, die der Belüftung dienen.

**16.** Elektrische Sicherung nach Anspruch 14, dadurch gekennzeichnet, daß

der Körper (3) mit weiteren Längsspalten ausgestattet ist, die der Belüftung dienen.

**17.** Elektrische Sicherung nach einem der Ansprüche 1-3, dadurch gekennzeichnet, daß

die Sicherung einen Standardkennmelder aufweist, bei dem ein kappenhaltender dünner Draht durch auseinanderfliegende Bruchteile des Einsatzes (4) nach dem Bruch des Einsatzes (4) durchtrennt wird.

**18.** Elektrische Sicherung nach einem der Ansprüche 1-17, dadurch gekennzeichnet, daß

die Legierung mit Formgedächtniseigenschaften eine Legierung auf Kupferbasis ist und als legierende Elemente
10,8-11,8 Massenprozent Aluminium (Al),
2,5-5,4 Massenprozent Kadmium (Cd),
0,5-1,5 Massenprozent Nickel (Ni),
0-2,7 Massenprozent Silber (Ag),
0-0,5 Massenprozent Mangan (Mn),
0,1-0,05 Massenprozent Vanadium (V) und
als Rest Kupfer (Cu) enthält.

**19.** Elektrische Sicherung nach einem der Ansprüche 1-17, dadurch gekennzeichnet, daß

die Legierung mit Formgedächtniseigenschaften eine Legierung auf Kupferbasis ist und als legierende Elemente
10,8-11,9 Massenprozent Aluminium (Al),
0,9-2,5 Massenprozent Beryllium (Be),
1,2-4,5 Massenprozent Silber (Ag),
2,2-5,8 Massenprozent Zirkonium (Zr),

0,7-5,3 Massenprozent Magnesium (Mg),

0,1-0,7 Massenprozent Natrium (Na) und
als Rest Kupfer (Cu) enthält.

20. Elektrische Sicherung nach Anspruch 4 und Anspruch 18 oder 19, dadurch gekennzeichnet, daß

- das dünne Band (4) ein amorphes Bruchband ist.

**FIG. 1**

**FIG. 2 a**

FIG. 2 b

FIG. 3

FIG. 4

a)

b)

FIG. 5

a)      b)      c)      d)      e)

FIG. 6            FIG. 7

a)      b)      a)      b)      c)

FIG. 8

a)      b)      c)

FIG. 9

a)          b)          c)          d)

FIG. 10                    FIG. 11

a)          b)          a)          b)

FIG. 12

a)          b)          c)          d)

FIG. 13

FIG. 14

a)

b)

a)

b)

c)

FIG. 15

FIG. 16

a)

b)

a)

b)

FIG. 17

a)

b)

c)

FIG. 18

FIG. 19

a)

b)

a)

b)

FIG. 20

a)

b)

FIG. 21

a)

b)

FIG. 22

a)

b)

FIG. 23

FIG. 24

FIG. 25

FIG. 26

Europäisches
Patentamt

**EUROPÄISCHER RECHERCHENBERICHT**

Nummer der Anmeldung

EP 99 12 1886

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | PATENT ABSTRACTS OF JAPAN vol. 017, no. 203 (E-1354), 21. April 1993 (1993-04-21) & JP 04 345724 A (FUJITSU LTD), 1. Dezember 1992 (1992-12-01) * Zusammenfassung * | 1-3,10 | H01H85/055 H01H71/14 |
| Y | EP 0 013 280 A (BBC BROWN BOVERI & CIE) 23. Juli 1980 (1980-07-23) * Zusammenfassung; Abbildungen 1-5 * * Seite 4, Zeile 8 - Seite 8, Absatz 1 * * Seite 12, Absatz 2 - Seite 13, Zeile 29 * | 1-3,10 | |
| A | PATENT ABSTRACTS OF JAPAN vol. 010, no. 163 (M-487), 11. Juni 1986 (1986-06-11) & JP 61 014488 A (MATSUSHITA DENKI SANGYO KK), 22. Januar 1986 (1986-01-22) * Zusammenfassung * | 1 | |
| A | PATENT ABSTRACTS OF JAPAN vol. 015, no. 036 (E-1027), 29. Januar 1991 (1991-01-29) & JP 02 273434 A (HOKURIKU ELECTRIC IND CO LTD), 7. November 1990 (1990-11-07) * Zusammenfassung * | 1 | **RECHERCHIERTE SACHGEBIETE (Int.Cl.7)** H01H |
| A | WO 96 03761 A (WELWYN COMPONENTS LTD ;GRIEVE DENNIS (GB)) 8. Februar 1996 (1996-02-08) * Zusammenfassung * | 1 | |
| A,D | GB 797 068 A (KENNETH EARDLEY BESWICK) | | |
| A,D | EP 0 791 946 A (DRIESCHER SPEZIALFAB FRITZ) 27. August 1997 (1997-08-27) | | |

-/--

Der vorliegende Recherchenbericht wurde für alle Patentansprüche erstellt

| Recherchenort | Abschlußdatum der Recherche | Prüfer |
|---|---|---|
| DEN HAAG | 26. Januar 2000 | Desmet, W |

EPO FORM 1503 03.82 (P04C03)

**EP 0 999 570 A1**

Europäisches
Patentamt

**EUROPÄISCHER RECHERCHENBERICHT**

Nummer der Anmeldung

EP 99 12 1886

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN vol. 013, no. 280 (E-779), 27. Juni 1989 (1989-06-27) & JP 01 067835 A (HITACHI LTD), 14. März 1989 (1989-03-14) * Zusammenfassung * ----- | | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 26. Januar 2000 | Desmet, W |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 12 1886

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2000

| Im Recherchenbericht angeführtes Patentdokument | Datum der Veröffentlichung | Mitglied(er) der Patentfamilie | Datum der Veröffentlichung |
|---|---|---|---|
| JP 04345724 A | 01-12-1992 | KEINE | |
| EP 0013280 A | 23-07-1980 | DE 7923665 U | 04-06-1980 |
| JP 61014488 A | 22-01-1986 | KEINE | |
| JP 02273434 A | 07-11-1990 | JP 2775703 B | 16-07-1998 |
| WO 9603761 A | 08-02-1996 | KEINE | |
| GB 797068 A | | KEINE | |
| EP 0791946 A | 27-08-1997 | DE 19607756 C<br>DE 19702780 C<br>DE 29619134 U<br>DE 59700152 D<br>ES 2131419 T<br>US 5880664 A | 02-10-1997<br>05-02-1998<br>16-01-1997<br>10-06-1999<br>16-07-1999<br>09-03-1999 |
| JP 01067835 A | 14-03-1989 | KEINE | |

EPO FORM P0461

Für nähere Einzelheiten zu diesem Anhang : siehe Amtsblatt des Europäischen Patentamts. Nr. 12/82